# EUROPEAN PATENT SPECIFICATION

(11) **EP 2 796 278 B1**
(45) Date of publication and mention of the grant of the patent: **31.01.2018**
(21) Application number: 12860460.0
(22) Date of filing: 18.12.2012
(51) Int. Cl.: B29D 30/20, B29D 30/26, B29D 30/32

(54) **TIRE BUILDING MACHINE AND BOOST TURN-UP METHOD THEREOF**
REIFENHERSTELLUNGSMASCHINE UND UMKREMPELVERSTÄRKUNGSVERFAHREN DAFÜR
MACHINE À CONFECTIONNER DES PNEUS ET PROCÉDÉ DE RECOUVREMENT PAR POUSSÉE DE LADITE MACHINE

(30) Priority: 22.12.2011 CN 201110433490
(43) Date of publication of application: 29.10.2014
(73) Proprietor: Mesnac Co. Ltd., 266042 Shandong, China (CN)
(72) Inventor: CHENG, Jiguo, Qingdao 266042 Shandong (CN); WU, Shoutao, Qingdao 266042 Shandong (CN); YANG, Huili, Qingdao 266042 Shandong (CN); SUN, Mingxin, Qingdao 266042 Shandong (CN); Zhongxue, Yuan, Qingdao Shandong (CN)
(74) Representative: Rentsch Partner AG
(86) International application number: PCT/CN2012/086846
(87) International publication number: WO 2013/091527

(56) References cited:
- WO-A1-2011/065829
- WO-A1-2011/145926
- CN-A- 102 049 871
- CN-U- 202 412 720
- JP-A- 2005 319 598
- US-A- 5 322 587

## Description

### Field of the invention

The invention relates to a tire forming machine for preparing a rubber tire and a boost turn-up method thereof, and belongs to the field of rubber machinery.

More specifically, the invention relates to a tire forming machine according to claim 6, comprising: a belt drum carried and driven by a belt drum case, and a forming drum carried and driven by a forming drum case, a first boost device arranged along the axial direction at a side part of the belt drum, wherein the first boost device is capable of pushing a Bladder or a turn-up rod at one side of the forming drum along the axial direction under the drive of an axial drive device; and a second boost device arranged along the axial direction at the side part of the forming drum, wherein the second boost device is capable of pushing a Bladder or a turn-up rod at the other side of the forming drum along the axial direction under the drive of an axial drive device.

Further more specifically, the invention relates to a boost turn-up method of a tire forming machine according to claim 1, the forming machine comprising a belt drum which is carried and driven by a belt drum case , a forming drum which is carried and driven by a forming drum case , a first boost device arranged along an axial direction at a first side part of the belt drum , a second boost device arranged along the axial direction at a second side part of the forming drum, wherein first boost device and the second boost device are symmetrical along a vertical center line of the forming drum in a turn-up preparation process of the tire, the method comprising in the boost turn-up operation simultaneously pushing, by the first and second boost devices , Bladder or turn-up rods towards the vertical center line of the forming drum from the respective first and second side parts, thus exerting simultaneous the same thrust.

### Background of the invention

On the basis of the existing preparation technology and equipment structure of the rubber tire, a double-drum, triple-drum or four-drum forming machine is usually adopted, and differences between tire blank production technologies are determined by the differences of manufacturing equipment and methods.

For a forming machine for finishing turn-up processing of a tire blank, at least one belt drum for preparing a belt-tread component, and one forming drum for respectively conveying a tire component and the belt-tread component to finish laminating and turn-up operations need to be independently arranged. In order to finish the turn-up operation of the tire blank, Bladder or finger-shaped turn-up rods at two sides are generally adopted.

The existing turn-up device leads in compressed air through an air cavity in general, so as to axially drive the Bladder or the finger-shaped turn-up rods sleeved on a main shaft of a forming drum; the Bladder or the finger-shaped turn-up rods extrude the tire side part from two sides of the forming drum, so as to finish the overall turn-up process.

For example, a Chinese patent application whose the application number is 200920019931.0; the name is a mechanical forming drum; the main scheme is as follows: the mechanical forming drum comprises a hollow columnar main shaft; a roller screw with left and right symmetrical threads is arranged inside the main shaft; a lock block component and a finger-shaped turn-up device are symmetrically sleeved along the outer circumference and the vertical center line of the main shaft; the finger-shaped turn-up device comprises a cylinder sliding sleeve, a cylinder body and a plurality of finger-shaped turn-up rods; the finger-shaped turn-up rods are evenly arranged along the outer circumference of the main shaft; a turn-up roller is arranged at the front end part of each turn-up rod; the rear end part of each turn-up rod is axially arranged at the rear end of the cylinder body; the roller screw is connected to the rear end of the cylinder sliding sleeve through a pin shaft and a key; the lock block component comprises a lock block cylinder body arranged at the front end of the cylinder sliding sleeve; the lock block cylinder body is connected and fastened with a tire body lock block group through a piston group and a connecting rod in the internal part.

The above existing technical solution is as follows: the Bladder or the finger-shaped turn-up rods achieve turn-up by virtue of thrust of a pneumatic device. The pneumatic thrust device is easily affected objective factors such as air source pressure, air cavity sealing performance and the like; the thrust exerted on two sides of the tire blank does not easily achieve synchronous and isodynamic effects, and is not easily maintained within the force value range of the design requirements for a long period of time; the pressure exerted on the tire side part is unstable and unbalanced in distribution, so that air bubbles are easily preserved in the tire, so as to affect the subsequent processing quality and safe use of the tire blank.

For this purpose, the patient application is particularly proposed.

CN102049871A teaches a boost turn-up method and tire forming machine. A belt drum is arranged coaxially with a shaft of a forming drum case carrying a forming drum. There is no separate belt drum case.

US5322587A teaches a boost turn-up method and tire forming machine as defined at the outset. A first bead setting mechanism which provides a boost turn-up operation together with a second bead setting mechanism is driven by a transferring mechanism. The position of a driving section / supporting element of a belt forming mechanism is fixed.

Another tire forming machine comprising a belt drum and a forming drum and boost devices for the bladders of the forming drum are disclosed in EP 0 951 986 A1.

### Invention content

The invention discloses a tire forming machine and a boost turn-up method thereof of the type as defined at the outset, and aims at solving the problems of the existing prior art. Thus, mechanical boost turn-up method and device are adopted; axial thrust is provided to the Bladder or the turn-up rods through mechanical boost devices at two sides of the forming drum in simultaneous, isodynamic and persistent manners. Thus, the Bladder or the turn-up rods are assisted to finish the overall turn-up process, so as to achieve a turn-up operation with stable and evenly distributed pressure, and improve the tire blank forming quality.
Another purpose of the invention is as follows: equal thrust at two sides and equal distances can be achieved, and variable and controllable thrust, variable and controllable speed, and variable and controllable position in the turn-up process also can be achieved.
Yet another purpose of the invention is as follows: air supply and delivery line designs of the existing forming machine and forming drum can be simplified, and design and use of related components are reduced. Thus, the overall manufacturing cost of the forming machine is reduced, and the forming technology is optimized.

In accordance with the invention as most generally defined by the features of claim 6 the tire forming machine is characterized in that the belt drum case and/or the forming drum case is carried on a bottom slide rail, and can slide in a reciprocating manner along a horizontal direction under the drive of at least one slide rail drive device.

Preferred embodiments of the tire forming machine are set forth in dependent claims 7-11.

In accordance with the invention as most generally defined by the features of claim 1 the boost turn-up method for the tire forming machine is characterized in that it comprises before the boost turn-up operation is carried out the steps: carrying the belt drum case and/or the forming drum case on a bottom slide rail on which such devices can slide in a reciprocating manner along a horizontal direction under the drive of at least one slide rail drive device, and conveying, by carrying the belt drum case, the first boost device and/or, conveying, by carrying the forming drum case, the second boost device so that the first boost device and the second boost device are symmetrical along the vertical center line of the forming drum.

Preferred embodiments of the boost turn-up method for the tire forming machine are set forth in dependent claims 2 -5.

The first boost device and the second boost device are symmetrical along the vertical center line of the forming drum in the turn-up preparation process of the tire blank; the first boost device and the second boost device push Bladder or turn-up rods toward the center from two sides of the forming drum. Thus, the same thrust is simultaneously exerted to assist implementation of a turn-up operation.

As the basic scheme, the first boost device and the second boost device provide mechanical boost thrust to the Bladder or the turn-up rods in the axial movement process; the characteristics of the mechanical boost thrust are as follows: controllable and adjustable thrust can be simultaneously exerted, and the time of exerting the thrust also can be accurately controlled and adjusted.

The Bladder or the turn-up rods can exert the stable and evenly distributed pressure from the tire side to the crown part in simultaneous and isodynamic manners under the mechanical boost action. Therefore, air bubbles cannot be easily preserved between composite layers, and the overall turn-up operation is high in quality.

In addition, the existing forming drum may be mainly divided into a mechanical mode (namely using the turn-up rods) and a Bladder mode (namely using the Bladder). The maintenance cost is reduced, and the utilization rate of equipment is improved when the mechanical forming drum adopts the turn-up rods to carry out the turn-up operation while the Bladder used by the Bladder drums need to be frequently replaced, so that the labor intensity is higher, and the maintenance cost and time are more. But a few of mechanical forming drums are adopted at present, and are mainly limited by large stretching and deep indentations of the turn-up rods on the tire side.

The boost turn-up method for the tire forming machine disclosed by the invention can be simultaneously applicable to the mechanical forming drums and the Bladder drums. Accurate control on the force size, the speed and the position in the turn-up process can be carried out through the controllable boost devices according to the difference of tire blank specifications, the difference of sizing materials of the tire side and the difference of the technological requirements.

In view of the factors, such as complicated structure of the main machine of the forming machine, large axial length, long distance between the belt drum case and the first boost device, and the like, if the belt drum case adopts a fixed mounting structure, the distance that the first boost device achieves the equipotential workstations of the Bladder or the turn-up rods is large, and maintaining of stable mechanical boost thrust is not facilitated. Therefore, the preferable improvement scheme can be adopted as follows:
The belt drum case is carried on a bottom slide rail, and can slide in a reciprocating manner along the horizontal direction under the drive of a slide rail drive device; the belt drum case carries the first boost device to slide to one side of the forming drum before the boost turn-up operation is carried out, so that the first boost device and the second boost device are symmetrical along the vertical center line of the forming drum.

Namely, the belt drum case firstly drives the first boost device to slide to the waiting workstation before the boost turn-up operation, and then axially drives the first boost device and the second boost device to push the Bladder or the turn-up rods in simultaneous and isodynamic manners.

The improvement scheme comprises two modes, 1, the forming drum case also oppositely drive the second boost device to slide to the waiting workstation before the boost turn-up operation when the belt drum case axially slides; 2, the forming drum case adopts the fixed mounting mode, namely the initial position of the second boost device is at the waiting workstation before the boost turn-up operation.

Similarly, on the basis of the considered factors, if the forming drum case adopts the fixed mounting structure, the waiting time that the belt drum case axially moves to the boost workstation is long; after all, the main structure components and operation workstations for forming the tire blank are arranged at one side of the forming drum. Therefore, the optimal scheme also can be adopted as follows:
The forming drum case is carried on the bottom slide rail, and can slide in a reciprocating manner along the horizontal direction under the drive of the slide rail drive device; The forming drum case carries the second boost device (no matter the belt drum case carries the first boost device to axially move or not) to axially slide before the boost turn-up operation is carried out, so that the first boost device and the second boost device are symmetrical along the vertical center line of the forming drum.

The improvement scheme also comprises two modes hereon: 1, the belt drum case adopts the fixed mounting mode, namely the initial position of the first boost device is at the waiting workstation before the boost turn-up operation, and the forming drum case axially slides to convey the second boost device to the waiting workstation before the boost turn-up operation; 2, the belt drum case and the forming drum case axially slide, so as to convey the first boost device and the second boost to the symmetrical waiting workstations.

Based on the layout structure adopted by the existing forming machine in general, a relatively feasible preferable scheme is as follows:
In order to further improve the balance of the exerted turn-up pressure, annular boost plates capable of extending outside along the axial directions can be respectively arranged at the end parts of the first boost device and the second boost device; the boost plates push the Bladder or the turn-up rods upwards from the sides.

The same axial drive devices are adopted in the belt drum case and the forming drum case to provide the mechanical boost thrust exerted by the first boost device and the second boost device.

Certainly, different structures of boost plate tools adapted to the Bladder turn-up mode and the mechanical turn-up mode need to be arranged correspondingly to the mechanical forming drums and the Bladder drums.

Take the belt drum case for instance, the relatively reliable scheme for the drive devices is as follows:
a sliding shaft is sleeved on the inner diameter of a main shaft of the belt drum case; the boost plates are arranged at the outer side end of the sliding shaft; a group of axial drive devices are connected to the inner side end of the sliding shaft, so as to exert lateral boost thrust on the boost plates by axial sliding shift of the sliding shaft.

On the basis of the design concept of the invention, by adopting the boost turn-up method, improvement of the tire forming machine structure can be achieved as follows:
Namely the tire forming machine mainly comprises the belt drum which is carried and driven by the belt drum case, and the forming drum which is carried and driven by the forming drum case.

The first boost device which is arranged along the axial direction is arranged at the side part of the belt drum; the first boost device can push the Bladder or the turn-up rod at one side of the forming drum along the axial direction under the drive of the axial drive device;

The second boost device which is arranged along the axial direction is arranged at the side part of the forming drum; the second boost device can push a Bladder or a turn-up rod at the other side of the forming drum along the axial direction under the drive of the axial drive device.

Particularly, the belt drum case is carried on the bottom slide rail, and can slide in a reciprocating manner along the horizontal direction under the drive of a slide rail drive device.

The forming drum case further can be carried on the bottom slide rail, and can slide in a reciprocating manner along the horizontal direction under the drive of the slide rail drive device.

In addition, the annular boost plates capable of extending outside along the axial directions are respectively arranged at the end parts of the first boost device and the second boost device.

To sum up the contents, the tire forming machine and the boost turn-up method thereof disclosed by the invention has the advantages and beneficial effects as follows:
1. By adopting the mechanical boost turn-up method and device, the axial thrust is provided to the Bladder or the turn-up rods in simultaneous, isodynamic and persistent manners, the operation with stable and evenly distributed pressure is achieved in the overall turn-up process, the tire blank forming quality is relatively high, and the probability that the air bubbles are preserved between the composite layers are effectively reduced.
2. The pneumatic drive and delivery line designs of the existing forming machine can be simplified, and related components are reduced. Thus, the overall manufacturing cost of the forming machine is reduced, and the forming technology is optimized.

### Description of figures

The tire forming machine and the boost turn-up method thereof are further described at present by combining with the figures as follows:
The figure 1 is the local diagram of the tire forming machine for achieving the boost turn-up method;
The figure 2 is the diagram in mechanical boost;
The figure 3 is the structural diagram of the belt drum case;
The figure 4 is the longitudinal cross-section diagram of the figure 3.

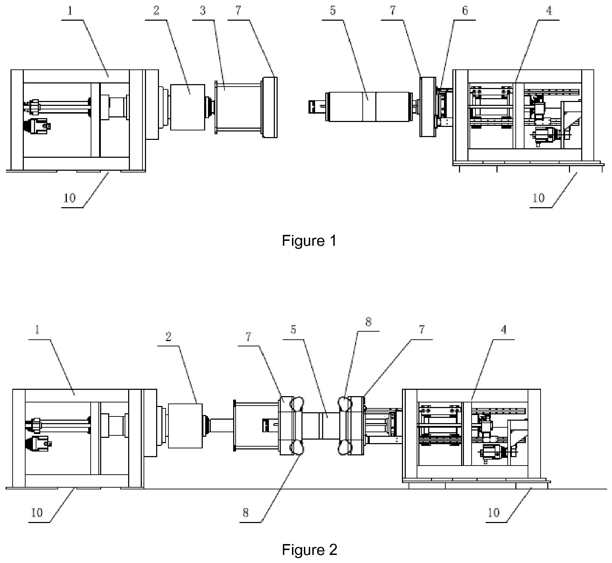

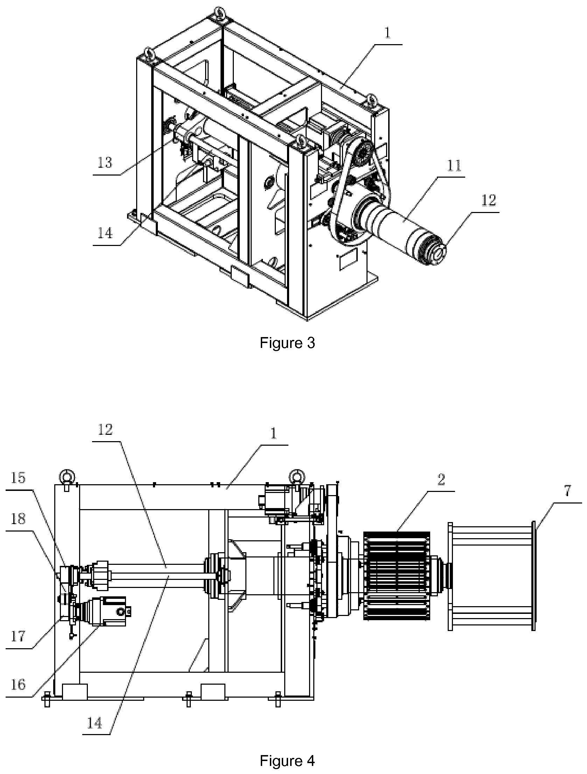

As shown in the figures 1 to 4, a belt drum case 1, a belt drum 2, a first boost device 3, a forming drum case 4, a forming drum 5, a second boost device 6, boost plates 7, Bladder 8, a slide rail 10, a main shaft 11, a sliding shaft 12, a slide saddle 13, ball screws 14, driven pulleys 15, a gear motor 16, a driving pulley 17, and a synchronous belt 18.

### Concrete implementation mode

Embodiment 1, as shown in the figures 1 to 4, the tire forming machine mainly comprises a belt drum 2 which is carried and driven by a belt drum case 1, and a forming drum 5 which is carried and driven by a forming drum case 4;
The belt drum case 1 is carried on the bottom slide rail 10, and can slide in a reciprocating manner along the horizontal direction under the drive of the slide rail drive device;
The forming drum case 4 is carried on the bottom slide rail 10, and can slide in a reciprocating manner along the horizontal direction under the drive of the slide rail drive device.

Wherein the first boost device 3 which is arranged along the axial direction is arranged at the side part of the belt drum 2; the first boost device 3 can push the Bladder 8 at one side of the forming drum 5 along the axial direction under the drive of the axial drive device;
The second boost device 6 which is arranged along the axial direction is arranged at the side part of the forming drum 5; the second boost device 6 can push the Bladder 8 at other side of the forming drum 5 along the axial direction under the drive of the axial drive device;
The annular boost plates 7 capable of extending outside along the axial directions are respectively arranged at the end parts of the first boost device 3 and the second boost device 6;
The same structures of axial drive devices can be adopted in the belt drum case 1 and the forming drum case 4.

Take the belt drum case 1 for instance, the horizontal sliding shaft 12 is sleeved on the inner diameter of the main shaft 11 of the belt drum case 1; the boost plates 7 are arranged at the outer side end of the sliding shaft 12; the inner side end of the sliding shaft 12 is fixedly connected with the slide saddle 13; the slide saddle 13 is simultaneously sleeved on the ball screws 14 at two sides; the driven pulleys 15 are arranged at the end parts of the ball screws 14;
The driving pulley 17 is sleeved on the output end of the gear motor 16; the synchronous belt 18 is connected between the driving pulley 17 and the driven pulleys 15.

The boost turn-up method for the tire forming machine comprises the steps as follows: the belt drum case 1 is carried on the bottom slide rail 10, and can slide in a reciprocating manner along the horizontal direction under the drive of the slide rail drive device;
The forming drum case 4 is carried on the bottom slide rail 10, and can slide in a reciprocating manner along the horizontal direction under the drive of the slide rail drive device;
The belt drum case 1 and the forming drum case 4 respectively carry the first boost device 3 and the second boost device 6 to axially slide a distance oppositely before the boost turn-up operation is carried out, so that the first boost device 3 and the second boost device 6 are synchronous along the vertical center line of the forming drum 5;
The first boost device 3 and the second boost device 6 are synchronous along the vertical center line of the forming drum 5 in the turn-up preparation process of the tire, and push the Bladder 8 from the center to two sides of the forming drum 5, so that the same thrust is simultaneously exerted to assist implementation of the turn-up operation.

In the boost turn-up method, the annular boost plates 7 capable of extending outside along the axial directions and used for axially pushing the Bladder 8 are respectively arranged at the end parts of the first boost device 3 and the second boost device 6.

Take the belt drum case 1 for instance, the sliding shaft 12 is sleeved on the inner diameter of the main shaft 11 of the belt drum case; the boost plates 7 are arranged at the outer side end of the sliding shaft 12; the inner side end of the sliding shaft 12 is connected with a group of axial drive devices, so that the so as to exert lateral boost thrust on the boost plates 7 by axial sliding shift of the sliding shaft 12.

## Claims

1. A boost turn-up method of a tire forming machine, the forming machine comprising a belt drum (2) which is carried and driven by a belt drum case (1), a forming drum (5) which is carried and driven by a forming drum case (4), a first boost device (3) arranged along an axial direction at a first side part of the belt drum (2), a second boost device (6) arranged along the axial direction at a second side part of the forming drum (5), wherein first boost device (3) and the second boost device (6) are symmetrical along a vertical center line of the forming drum (5) in a turn-up preparation process of the tire,
the method comprising in the boost turn-up operation simultaneously pushing, by the first and second boost devices (3, 6), Bladder (8) or turn-up rods towards the vertical center line of the forming drum (5) from the respective first and second side parts, thus exerting simultaneous the same thrust,
**characterized in that**:
the method comprises before the boost turn-up operation is carried out:
carrying the belt drum case (1) and/or the forming drum case (4) on a bottom slide rail (10) on which such devices can slide in a reciprocating manner along a horizontal direction under the drive of at least one slide rail drive device, and sliding the first boost device (3), carried by the belt drum case (1), to one side of the forming drum (5) and/or sliding the second boost device (6), carried by the forming drum case (4), so that the first boost device (3) and the second boost device (6) are symmetrical along the vertical center line of the forming drum (5).

2. The boost turn-up method of the tire forming machine according to claim 1, **characterized in that** the belt drum case (1) is carried on the bottom slide rail (10) before the boost turn-up operation is carried out.

3. The boost turn-up method of the tire forming machine according to claim 1, **characterized in that** both, the belt drum case (1) and the forming drum case (4) are carried on the bottom slide rail (10) before the boost turn-up operation is carried out.

4. The boost turn-up method of the tire forming machine according to one of claims 1 - 3, **characterized in that** annular boost plates (7) capable of extending outside along the axial directions are respectively arranged at end parts of the first boost device (3) and the second boost device (6).

5. The boost turn-up method of the tire forming machine according to claim 4, **characterized in that** a sliding shaft (12) is sleeved on the inner diameter of a main shaft (11) of the belt drum case (1), the annular boost plates (7) are arranged at the outer side end of the sliding shaft (12), a group of axial drive devices are connected to the inner side end of the sliding shaft (12), so as to exert lateral boost thrust on the boost plates (7) by axial sliding shift of the sliding shaft (12).

6. A tire forming machine, comprising:
a belt drum (2) carried and driven by a belt drum case (1), and
a forming drum (5) carried and driven by a forming drum case (4),
a first boost device (3) arranged along the axial direction at a side part of the belt drum (2), wherein the first boost device (3) is capable of pushing a bladder (8) or a turn-up rod at one side of the forming drum (5) along the axial direction under the drive of an axial drive device; and
a second boost device (6) arranged along the axial direction at the side part of the forming drum (5), wherein the second boost device (6) is capable of pushing a bladder (8) or a turn-up rod at the other side of the forming drum (5) along the axial direction under the drive of an axial drive device,
**characterized in that**:
before the boost turn-up operation is carried out,
the belt drum case (1) and/or the forming drum case (4) is carried on a bottom slide rail (10) and can slide in a reciprocating manner along a horizontal direction under the drive of at least one slide rail drive device, and that the first boost device (3), that is carried by the belt drum case (1), slides to one side of the forming drum and/or the second boost device (6), that is carried by the forming drum (5), slides, so that the first boost device (3) and the second boost device (6) are symmetrical along the vertical center line of the forming drum (5).

7. The tire forming machine according to claim 6, **characterized in that** the belt drum case (1) is capable of being carried on the bottom slide rail (10) before the boost turn-up operation is carried out and is capable of sliding in a reciprocating manner along the horizontal direction under the drive of a slide rail drive device.

8. The tire forming machine according to claim 6, **characterized in that** both, the belt drum case (1) and the forming drum case (4) are capable of being carried on the bottom slide rail (10) before the boost turn-up operation is carried out, and are capable of sliding in a reciprocating manner along the horizontal direction under the drive of a slide rail drive device.

9. The tire forming machine according to one of claims 6 - 8, **characterized in that** annular boost plates (7) capable of extending outside along the axial directions are respectively arranged at the end parts of the first boost device (3) and the second boost device (6).

10. The tire forming machine according to claims 8 and 9, **characterized in that** a sliding shaft (12) is sleeved on the inner diameter of a main shaft (11) of the belt drum case (1), the boost plates (7) are arranged at the outer side end of the sliding shaft (12), an inner side end of the sliding shaft (12) is fixedly connected with a slide saddle (13), the slide saddle (13) is simultaneously sleeved on ball screws (14) at two sides, driven pulleys (15) are arranged at the end parts of the ball screws (14), a driving pulley (17) is sleeved on an output end of a gear motor (16), and a synchronous belt (18) is connected between the driving pulley (17) and the driven pulleys (15).

11. The tire forming machine according to claims 7 - 10, **characterized in that** the same structures (12-18) of axial drive devices are adopted in the belt drum case (1) and the forming drum case (4).

## Patentansprüche

1. Umkrempelverstärkungsverfahren einer Maschine zur Herstellung von Reifen, wobei die Maschine zur Reifenherstellung eine Gurttrommel (2) umfasst, die von einem Gurttrommelgehäuse (1) getragen und angetrieben wird, eine Formwalze (5), die von einem Formwalzengehäuse (4) getragen und angetrieben wird, eine erste Verstärkungsvorrichtung (3), die entlang einer axialen Richtung an einem ersten Seitenteil der Gurttrommel (2) angeordnet ist, eine zweite Verstärkungsvorrichtung (6), die entlang der axialen Richtung an einem zweiten Seitenteil der Formwalze (5) angeordnet ist, wobei die erste Verstärkungsvorrichtung (3) und die zweite Verstärkungsvorrichtung (6) symmetrisch zu einer vertikalen Mittellinie der Formwalze (5) in einem Umkrempelpräparationsprozess des Reifens sind,
wobei das Verfahren beim Umkrempelverstärkungsbetrieb gleichzeitiges Stoßen durch die erste und zweite Verstärkungsvorrichtung (3, 6), Blase (8) oder Umkrempelstäbe zur vertikalen Mittellinie der Formwalze (5) vom ersten bzw. zweiten Seitenteil aus umfasst, wobei daher gleichzeitig dieselbe Stoßkraft ausgeübt wird,
**dadurch gekennzeichnet, dass**:
das Verfahren Folgendes umfasst, bevor die Umkrempelverstärkungsoperation ausgeführt wird:
Tragen des Gurttrommelgehäuses (1) und/oder des Formwalzengehäuses (4) auf einer Bodengleitschiene (10), auf der solche Vorrichtungen hin- und hergleiten können in einer horizontalen Richtung unter dem Antrieb von mindestens einer Gleitschienen-Antriebsvorrichtung, und
Gleiten der ersten Verstärkungsvorrichtung (3), die vom Gurttrommelgehäuse (1) getragen wird, auf eine Seite der Formwalze (5) und/oder Gleiten der zweiten Verstärkungsvorrichtung (6), die vom Formwalzengehäuse (4) getragen wird,
so dass die erste Verstärkungsvorrichtung (3) und die zweite Verstärkungsvorrichtung (6) symmetrisch zur vertikalen Mittellinie der Formwalze (5) sind.

2. Umkrempelverstärkungsverfahren der Maschine zur Herstellung von Reifen nach Anspruch 1, **dadurch gekennzeichnet, dass** das Gurttrommelgehäuse (1) auf der Bodengleitschiene (10) getragen wird, bevor das Umkrempelverstärkungsverfahren ausgeführt wird.

3. Umkrempelverstärkungsverfahren der Maschine zur Herstellung von Reifen nach Anspruch 1, **dadurch gekennzeichnet, dass** das Gurttrommelgehäuse (1) und das Formwalzengehäuse (4) auf der Bodengleitschiene (10) getragen werden, bevor das Umkrempelverstärkungsverfahren ausgeführt wird.

4. Umkrempelverstärkungsverfahren der Maschine zur Herstellung von Reifen nach einem der Ansprüche 1 - 3, **dadurch gekennzeichnet, dass** ringförmige Verstärkungsplatten (7), die sich nach außen entlang der axialen Richtungen erstrecken können, jeweils an Endteilen der ersten Verstärkungsvorrichtung (3) und der zweiten Verstärkungsvorrichtung (6) angeordnet sind.

5. Umkrempelverstärkungsverfahren der Maschine zur Herstellung von Reifen nach Anspruch 4, **dadurch gekennzeichnet, dass** eine Gleitwelle (12) auf den Innendurchmesser einer Hauptwelle (11) des Gurttrommelgehäuses (1) aufgezogen ist, die ringförmigen Verstärkungsplatten (7) sind am äußeren Seitenende der Gleitwelle (12) angeordnet, eine Gruppe von axialen Antriebsvorrichtungen ist mit dem inneren Seitenende der Gleitwelle (12) verbunden, um so eine seitliche Verstärkungsstoßkraft auf die Verstärkungsplatten (7) durch axiale gleitende Verschiebung der Gleitwelle (12) auszuüben.

6. Maschine zur Herstellung von Reifen, umfassend:
eine Gurttrommel (2), die von einem Gurttrommelgehäuse (1) getragen und angetrieben wird, und
eine Formwalze (5), die von einem Formwalzengehäuse (4) getragen und angetrieben wird,
eine erste Verstärkungsvorrichtung (3), die entlang der axialen Richtung an einem Seitenteil der Gurttrommel (2) angeordnet ist, wobei die erste Verstärkungsvorrichtung (3) eine Blase (8) oder einen Umkrempelstab an einer Seite der Formwalze (5) entlang der axialen Richtung unter dem Antrieb einer axialen Antriebsvorrichtung stoßen kann; und
eine zweite Verstärkungsvorrichtung (6), die entlang der axialen Richtung am Seitenteil der Gurttrommel (5) angeordnet ist, wobei die erste Verstärkungsvorrichtung (6) eine Blase (8) oder einen Umkrempelstab an der anderen Seite der Formwalze (5) entlang der axialen Richtung unter dem Antrieb einer axialen Antriebsvorrichtung stoßen kann,
**dadurch gekennzeichnet, dass**:
bevor die Umkrempelverstärkungsoperation ausgeführt wird, das Gurttrommelgehäuse (1) und/oder das Formwalzengehäuse (4) auf einer Bodengleitschiene (10) getragen wird und entlang der horizontalen Richtung unter dem Antrieb von mindestens einer Gleitschienen-Antriebsvorrichtung hin und her gleiten kann, und dass
die erste Verstärkungsvorrichtung (3), die vom Gurttrommelgehäuse (1) getragen wird, auf eine Seite der Formwalze gleitet, und/oder die zweite Verstärkungsvorrichtung (6), die von der Formwalze (5) getragen wird, so gleitet, dass die erste Verstärkungsvorrichtung (3) und die zweite Verstärkungsvorrichtung (6) zur vertikalen Mittellinie der Formwalze (5) symmetrisch sind.

7. Reifenformmaschine nach Anspruch 6, **dadurch gekennzeichnet, dass** das Gurttrommelgehäuse (1) auf der unteren Gleitschiene (10) getragen werden kann, bevor die Umkrempelverstärkungsoperation ausgeführt wird, und in einer hin und her gehenden Weise entlang der horizontalen Richtung unter dem Antrieb einer Gleitschienen-Antriebsvorrichtung gleiten kann.

8. Reifenformmaschine nach Anspruch 6, **dadurch gekennzeichnet, dass** sowohl das Gurttrommelgehäuse (1) als auch das Formwalzengehäuse (4) auf der unteren Gleitschiene (10) getragen werden können, bevor die Umkrempelverstärkungsoperation ausgeführt wird, und in einer hin und her gehenden Weise entlang der horizontalen Richtung unter dem Antrieb einer Gleitschienen-Antriebsvorrichtung gleiten können.

9. Umkrempelverstärkungsverfahren der Vorrichtung zur Herstellung von Reifen nach einem der Ansprüche 6 - 8, **dadurch gekennzeichnet, dass** ringförmige Verstärkungsplatten (7), die sich nach außen entlang der axialen Richtungen erstrecken können, jeweils an den Endteilen der ersten Verstärkungsvorrichtung (3) bzw. der zweiten Verstärkungsvorrichtung (6) angeordnet sind.

10. Verstärkungsumkrempelmaschine nach den Ansprüchen 8 und 9, **dadurch gekennzeichnet, dass** eine Gleitwelle (12) auf den Innendurchmesser einer Hauptwelle (11) des Gurttrommelgehäuses (1) aufgezogen ist, die Verstärkungsplatten (7) am äußeren Seitenende der Gleitwelle (12) angeordnet sind, ein inneres Seitenende der Gleitwelle (12) fest mit einem Gleitsattel (13) verbunden ist, der Gleitsattel (13) gleichzeitig auf Kugelumlaufspindeln (14) an zwei Seiten aufgezogen ist, angetriebene Riemenscheiben (15) an den Endteilen der Antriebsscheiben (14) angeordnet sind, eine Treibscheibe (17) auf ein Ausgangsende eines Getriebemotors (16) aufgezogen ist, und ein Zahnriemen (18) zwischen der Treibscheibe (17) und den angetriebenen Riemenscheiben (15) liegt.

11. Reifenformmaschine nach Anspruch 7 - 10, **dadurch gekennzeichnet, dass** dieselben Strukturen (12-18) der axialen Antriebsvorrichtungen im Gurttrommelgehäuse (1) und im Formwalzengehäuse (4) übernommen werden.

## Revendications

1. Procédé de recouvrement de poussée d'une machine de confection de pneus, la machine de confection comprenant un tambour de courroie (2) qui est supporté et entraîné par un logement de tambour de courroie (1), un tambour de confection (5) qui est supporté et entraîné par un logement de tambour de confection (4), un premier dispositif de poussée (3) disposé le long d'une direction axiale au niveau d'une première partie latérale du tambour de courroie (2), un second dispositif de poussée (6) disposé le long de la direction axiale au niveau d'une second partie latérale du tambour de confection (5), dans lequel le premier dispositif de poussée (3) et le second dispositif de poussée (6) sont symétriques le long d'une ligne centrale verticale du tambour de confection (5) dans un processus de préparation de recouvrement du pneu,
le procédé comprenant dans le cadre de l'opération de recouvrement de poussée de pousser simultanément, par le premier et le second dispositif de poussée (3, 6), une bulle (8) ou des tiges de recouvrement vers la ligne centrale verticale du tambour de confection (5) à partir de la première et seconde partie latérale respective, en exerçant ainsi simultanément la même poussée avant,
**caractérisé en ce que** :
le procédé comprend avant que l'opération de recouvrement de poussée soit effectuée de :
transporter le logement de tambour de courroie (1) et/ou le logement de tambour de confection (4) sur un rail coulissant bas (10) sur lequel de tels dispositifs peuvent coulisser mutuellement le log d'une direction horizontale sous l'entraînement d'au moins un dispositif d'entraînement de rail latéral, et
coulisser le premier dispositif de poussée (3), supporté par le logement de tambour de courroie (1), vers un côté du tambour de confection (5) et/ou coulisser le second dispositif de poussée(6), supporté par le logement de tambour de confection (4),
de sorte que le premier dispositif de poussée (3) et le second dispositif de poussée (6) soient symétriques le long de la ligne centrale verticale du tambour de confection (5).

2. Procédé de recouvrement de poussée de la machine de confection de pneu selon la revendication 1, **caractérisé en ce que** le logement de tambour de courroie (1) est supporté sur le rail coulissant bas (10) avant que l'opération de recouvrement de poussée soit effectuée.

3. Procédé de recouvrement de poussée de la machine de confection de pneu selon la revendication 1, **caractérisé en ce que** à la fois le logement de tambour de courroie (1) et le logement de tambour de confection (4) sont supportés sur le rail latéral bas (10) avant que l'opération de recouvrement de poussée soit effectuée.

4. Procédé de recouvrement de poussée de la machine de confection de pneu selon une des revendications 1 - 3, **caractérisé en ce que** des plaques de poussée annulaires (7) capables de s'étendre vers l'extérieur le long des directions axiales sont respectivement disposées au niveau des parties d'extrémité du premier dispositif de poussée (3) et du second dispositif de poussée (6).

5. Procédé de recouvrement de poussée de la machine de confection de pneu selon la revendication 4, **caractérisé en ce que** un arbre coulissant (12) est emmanché sur le diamètre intérieur d'un arbre principal (11) du logement de tambour de courroie (1), les plaques de poussée annulaires (7) sont disposées à l'extrémité latérale extérieure de l'arbre coulissant (12), un groupe de dispositifs d'entraînement axial sont raccordé à l'extrémité latérale intérieure de l'arbre coulissant (12), de manière à exercer une poussée avant latérale sur les plaques de poussée (7) par décalage axial coulissant de l'arbre coulissant (12) .

6. Machine de confection de pneu, comprenant :
un tambour de courroie (2) supporté et entraîné par un logement de tambour de courroie (1), et
un tambour de confection (5) supporté et entraîné par un logement de tambour de confection (4),
un premier dispositif de poussée (3) disposé le long de la direction axiale au niveau d'une partie latérale du tambour de courroie(2), dans lequel le premier dispositif de poussée (3) est capable de pousser une bulle (8) ou une tige de recouvrement au niveau d'un côté du tambour de formation (5) le long de la direction axiale sous l'entraînement du dispositif d'entraînement axial ; et
un second dispositif de poussée (6) disposé le long de la direction axiale au niveau de la partie latérale du tambour de confection (5), dans lequel le second dispositif de poussée (6) est capable de pousser une bulle (8) ou une tige de recouvrement au niveau de l'autre côté du tambour de confection (5) le long de la direction axiale sous l'entraînement d'un dispositif d'entraînement axial,
**caractérisé en ce que** :
avant que l'opération de recouvrement de poussée soit effectuée,
le logement de tambour de courroie (1) et/ou le logement de tambour de confection (4) est supporté sur un rail latéral bas (10) et peut coulisser mutuellement le long d'une direction horizontale sous l'entraînement d'au moins un dispositif d'entraînement de rail latéral, et **en ce que**
le premier dispositif de poussée (3), qui est supporté par le logement de tambour de courroie (1), coulisse vers un côté du tambour de confection et/ou le second dispositif de poussée (6), qui est supporté par le tambour de confection (5), coulisse, de sorte que le premier dispositif de poussée (3) et le second dispositif de poussée (6) soient symétriques le long de la ligne central verticale du tambour de confection (5) .

7. Machine de confection de pneu selon la revendication 6, **caractérisée en ce que** le logement de tambour de courroie (1) est capable d'être supporté sur le rail coulissant bas (10) avant que l'opération de recouvrement de poussée soit effectuée et est capable de coulisser mutuellement le long de la direction horizontale sous l'entraînement d'un dispositif d'entraînement de rail coulissant.

8. Machine de confection de pneu selon la revendication 6, **caractérisée en ce que** à la fois le logement de tambour de courroie (1) et le logement de tambour de confection (4) sont capables d'être supportés sur le rail latéral bas (10) avant que l'opération de recouvrement de poussée soit effectuée, et sont capables de coulisser mutuellement le long de la direction horizontale sous l'entraînement d'un dispositif d'entraînement de rail latéral.

9. Machine de confection de pneu selon une des revendications 6 - 8, **caractérisée en ce que** des plaques de poussée annulaires (7) capables de s'étendre le long des directions axiales sont respectivement disposées au niveau des parties d'extrémité du premier dispositif de poussée (3) et du second dispositif de poussée (6).

10. Machine de confection de pneu selon la revendication 8 et 9, **caractérisée en ce que** un arbre coulissant (12) est emmanché sur le diamètre intérieur d'un arbre principal (11) du logement de tambour de courroie (1), les plaques de poussée (7) sont disposées au niveau de l'extrémité latérale extérieure de l'arbre coulissant (12), une extrémité latérale intérieure de l'arbre coulissant (12) est raccordée fixement avec une selle coulissante (13), la selle coulissante (13) est simultanément emmanchée sur des vis à billes (14) des deux côtés, des poulies entraînées (15) sont disposées au niveau des parties d'extrémité des vis à billes (14), une poulie d'entraînement (17) est emmanchée sur une extrémité de sortie d'un motoréducteur (16) et une courroie synchrone (18) est raccordée entre la poulie d'entraînement (17) et les poulies entraînées (15).

11. Machine de confection de pneu selon les revendications 7 - 10, **caractérisée en ce que** les mêmes structures (12-18) des dispositifs d'entraînement axiaux sont adoptées dans le logement de tambour de courroie (1) et le logement de tambour de confection (4).
